# EUROPEAN PATENT APPLICATION

(11) **EP 1 873 781 A1**
(43) Date of publication of application: **02.01.2008**
(21) Application number: 07252665.0
(22) Date of filing: 02.07.2007
(51) Int. Cl.: G11B 27/00, H04N 5/783

(54) **Display of processing modes for digital broadcast data**

(30) Priority: 30.06.2006 GB 0613038
(71) Applicant: Pace Micro Technology PLC, Shipley, West Yorkshire BD18 3LF (GB)
(72) Inventor: Fulcher, Richard, Saltaire, Shipley BD18 3LF (GB)
(74) Representative: Wood, Graham

(57) **Abstract**

The invention provides a method and system allowing the user selection of a particular mode of display of video data on a display screen connected to a BDR to be communicated to a decoder in the display device, thereby ensuring that the data is processed appropriately to allow the display to be generated.

## Description

The invention relates to a broadcast system and apparatus an in particular a digital television system in which data representing a plurality of television and radio programmes is broadcast from one or more broadcasters and then transmitted via satellite, cable or other transmission means to a plurality of locations at which the data is decoded via devices typically known as a set top boxes, broadcast data receivers or decoders. These devices are then connected to speakers and/or display screens either integrally or via cable or wireless connections to allow the programmes to be viewed and/or listened to.

The data which is received can be processed in accordance with international standards and/or user or broadcaster settings. Such standards and/or settings may include a number of different modes of processing which may include processing of the data in a particular manner so as to create particular effects such as slow motion or fast forward video displays. These modes can be referred to as "trick modes".

In one form the generation of the trick mode can be as a result of a user demand generated via the device for receiving the transmitted data (hereinafter referred to in a non-limiting manner as a broadcast data receiver (BDR))

The applicant has identified significant problems in being able to deal with the user instigated demands and herein addresses the issues of sending progressively encoded digital data streams, typically in an MPEG format, from a source device to a destination device across a digital interconnect and especially where a particular mode of operation has been selected by the user of the apparatus. In particular the applicant has identified the problem which conventionally occurs when there is provided a connection between a BDR which receives and relays data to the display device and/or speakers via a connection and wherein, for example, the display device includes a further decoder integrally therewith and no additional signalling means is available that can be used to instruct the far end device such as a television set or display screen which is connected to the BDR, how to decode the incoming stream of data correctly.

As previously referred to above the transmitted digital data is typically provided in a prescribed manner in accordance with agreed standards, one of which is the International Standard referred to as MPEG-2.

There is provided in these standards support and preset parameters which allow the support and provision of specific "trick modes" which can be generated from the transmitted data. However it is found that there is not sufficient support in this standard for data streams that are encoded progressively.

An increasingly common form of television set or display screen is that which is connected to the digital source such as a BDR or a hard disk storage device, via a digital interconnect cable such as that referred to as a 1394 standard interface. A problem which is experienced with devices connected using these 1394 interfaces is an inability to inform a data decoder which may be provided in the further device that the stream of data which is being transmitted to the device and being received is in a format so as to provide the performance of a trick mode display.

Typically, to perform a trick mode e.g. a fast-forward video display, the data decoder which is provided in the BDR is configured to decode the received video data at a higher rate than normal. However, there is no known mechanism to configure, setup or inform the decoder provided in the further device connected to the BDR (e.g. by a 1394 serial connector) that this trick mode is required. The result is that the television set provides poor trick mode viewing compared to a conventional display screen. This problem occurs on all data stream types, but the data stream type that suffers the most from this problem is the progressively encoded data stream.

The aim of the present invention is therefore to provide a means whereby the television set or display screen connected to the BDR can be able to more effectively deal with "trick mode" streams of data. A further aim is to achieve this without additional hardware, and preferably using a method that these devices are already capable of processing. Furthermore it is an aim to provide the invention in a form so that devices not capable of changing their data decode rate can ignore the same and there is no detrimental effect.

In a first aspect of the invention there is provided a broadcast data receiving system, said system incorporating a BDR for receiving broadcast data and processing the same in accordance with a user selected mode from a range of modes, said BDR connected to at least one display device to allow the processed data to be sent from the BDR to the device to allow at least video data to be generated therefrom and wherein for at least one user selectable display mode said data includes at least one additional field of data which is inserted to inform a decoder provided in the display device to decode packets of data which follow the additional field into a buffer memory provided as part of the display device and then subsequently display the data from the decoded buffer in the selected display mode on the screen of the display device.

In one embodiment the additional field of data is inserted into an MPEG Packetised Elementary Stream (PES) packet format.

This solution allows, particularly for progressively encoded data streams which are transmitted across a digital connection to said display device the instruction for several packets of data to be stored and then decoded to allow the creation of a video frame so that the same, in conjunction with successive frames can be generated in a particular format such as, for a example in a selected trick mode..

Typically the system repeats the process for each frame of video which is to be shown in the trick mode.

In one embodiment the system is repeated until the user selects to change the display mode in which case if the new mode is another trick mode a new additional field of data will be generated, or if the mode is a normal display mode the additional fields of data are no longer required.

Typically the source device for the data is the BDR which has the relevant control information required as it has received the users instructions for the particular trick mode to be generated and is receiving the transmitted data from the broadcaster which can then be processed as required.

Typically the BDR also knows how many packets are required to create the frame and this can be identified in the additional field of data so as to allow the required display of the data from the buffer in the display device once the required data has been allocated in the buffer.

In a further aspect of the invention there is provided a method of generating a user specified display mode for data received by a display device from a Broadcast data receiver which is provided to receive and process transmitted data, said display mode selected by the user from a range of modes, and a command is generated to the BDR to indicate the selected mode, said BDR connected to the at least one display device to allow the processed data to be sent from the BDR to the device to allow at least video data to be generated thereby as a display to the user and wherein upon a user selection of a particular display mode at least one field of data in addition to the data which is required for the generation of the video display, is inserted as an additional field of data into the stream of data sent to the display device to inform a decoder provided in the display device to decode the packets of data which follow the additional field of data and pass the same into an off-screen buffer memory of the display device, and subsequently display the data from the buffer memory to generate the display on the display screen in the required mode.

In one embodiment the additional field of data is generated by the BDR, in response to the user selection.

In one embodiment the additional field of data is specified in a look up table to which the BDR refers in response to the user selection.

In one embodiment the additional field of data indicates the number of subsequently transmitted packets of data which have to be moved into the buffer memory.

In one embodiment the additional field of data also includes an instruction to the display device decoder not to decode and display the data in the identified packets of data immediately upon receipt. The additional field of data may also include an instruction to ignore any time stamp data.

In one embodiment a further additional field is generated to indicate the end of a particular sequence of data packets.

Typically the end of a sequence of data packets indicates the end of a sequence of data which is required to generate one frame of video.

Typically the method is repeated for each frame of video until the user selected to change the display mode to a default mode for which the display device is set up to operate in a normal manner.

A specific example of the invention is now described with reference to the accompanying diagram wherein;

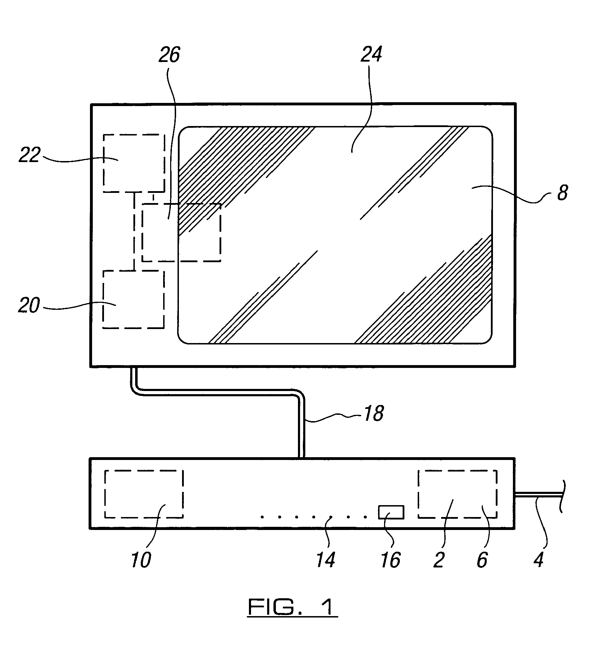

Figure 1 illustrates in a schematic manner, the apparatus which can be used in accordance with one embodiment of the invention.

In accordance with the invention there is provided a system for providing a video and audio data to a user at their premises. The data which is used is transmitted to the premises from a broadcaster at a remote location via satellite or cable transmission systems and is passed to the BDR2 via cable connection 4. The BDR includes therein means 6 and allowing the data to be passed to either the display device 8 directly or alternatively, in certain embodiments to a memory means 10 in the BDR. If the memory means is provided the data can subsequently be retrieved and sent to the display device as the user requires.

The BDR also includes a means in the form of buttons 14 or an infra red receiver 16 for the reception of user remote control signals, to allow the user to control the operation of the system.

One possible operation is to allow the user to determine the particular manner in which the video display on the display screen is generated i.e whether the same is to be in a trick mode. The selection of the mode of display can also be made by the broadcaster at the time of transmitting the data.

The connection between the BDR and the display device 8 is via, in this embodiment, a 1394 interconnect 18 which is shown for illustrative purposes. The display device incorporates a decoder 20 integral therewith and a buffer memory 22.

In one specific example of the performance of the invention the following sequential steps are followed:

If the BDR is requested to create a "Trick Mode" display such as Fast Forward or Reverse video display, then the request is typically generated by the user, typically via their remote control. For example, they may wish to watch a particular sports event again in slower movement, or may want to move forward to avoid seeing something which they had viewed already.

Upon this request being received by the BDR the BDR data processing system creates an additional data field such as a PES packet of data which contains additional data and this field of data will typically be inserted so as to provide information for a number of packets of data which follow the additional data in the order of transmission.

The additional data will typically include information for the decoder 20 of the display device that a number of packets of data of a predefined number which will follow are to be decoded "silently", in that the same are not to be passed immediately for display on the screen of the display device when received.

This additional data and the packets of data are then sent to the display device via connection 18 and to the decoder 20. The decoder 20 will then switch into a silent decode mode, and decodes the identified received packets of data and stores the same into the buffer memory 22.

The BDR device will send the sequence of identified video data packets that, when decoded will create a video frame for display on the display screen and the display screen decoder 20 decodes those packets of data that have been received into the buffer memory 22.

The BDR will then in one embodiment insert another data filed such as a PES data packet that indicates that the stream of packets of data required for that frame has finished and the video data held in the buffer memory 22 in the display device can be released from the memory for display on the screen 24.

Upon receiving this further PES data packet display device waits for the next vertical retrace (or equivalent) and then transfers the data in the buffer memory to an onscreen buffer memory 26 to allow the data to then be displayed.

The BDR can then repeat this sequence for data for each frame of data to be shown in the selected mode as is required. This may be, for example, until the user selects to change the display mode.

This system enables the BDR to control exactly how the decoded video will appear on the screen.

In an alternative embodiment the additional field of data can be inserted into a given MPEG PMT (Program Map Table) for the data stream performing the trick mode. This descriptor informs the decoder(s) 20 that the stream playout has been altered and the decoding rate needs to be set to the figure in the descriptor.

As a result of the invention as herein described, display devices will have the same end-user experience regarding trick-modes of display regardless of the type of interconnect between the display device and the BDR.

## Claims

1. A broadcast data receiving system, said system incorporating a BDR for receiving broadcast data and processing and displaying the same in accordance with a user selected mode from a range of modes, said BDR connected to at least one display device to allow the processed data to be sent from the BDR to the device to allow at least video data to be generated therefrom and wherein for at least one user selectable display mode said data includes at least one additional field of data which is inserted to inform a decoder provided in the display device to decode packets of data which follow the additional field into a buffer memory provided as part of the display device and then subsequently display the data from the decoded buffer in the selected display mode on the screen of the display device.

2. A system according to claim 1 wherein the additional field of data is inserted into an MPEG Packetised Elementary Stream (PES) packet format.

3. A system according to claim 1 wherein several packets of data are stored in the buffer memory and then decoded to allow the creation of a video frame so that the same, in conjunction with successive frames can be generated in the selected display mode.

4. A system according to claim 3 wherein the system repeats the process for each frame of video which is to be shown in the selected mode.

5. A system according to claim 4 wherein the system is repeated until the user selects to change the display mode.

6. A system according to claim 1 wherein the data is sent from a memory means in the BDR.

7. A system according to claim 1 wherein the BDR knows how many packets are required to create each video frame and this is identified in the additional field of data so as to allow the required display of the frame from the buffer in the display device once the required data has been allocated in the buffer.

8. A method of generating a user specified display mode for data received by a display device from a Broadcast data receiver which is provided to receive and process transmitted data, said display mode selected by the user from a range of modes, and a command is generated to the BDR to indicate the selected mode, said BDR connected to the at least one display device to allow the processed data to be sent from the BDR to the device to allow at least video data to be generated thereby as a display to the user and wherein upon a user selection of a particular display mode at least one field of data in addition to the data which is required for the generation of the video display, is inserted as an additional field of data into the stream of data sent to the display device to inform a decoder provided in the display device to decode the packets of data which follow the additional field of data and pass the same into an off-screen buffer memory of the display device, and subsequently display the data from the buffer memory to generate the display on the display screen in the required mode.

9. A method according to claim 8 wherein the additional field of data is generated by the BDR, in response to the user selection.

10. A method according to claim 8 wherein the additional field of data is specified in a look up table to which the BDR refers in response to the user selection.

11. A method according to claim 8 the additional field of data indicates the number of subsequently transmitted packets of data which have to be moved into the buffer memory to allow a video frame to be generated.

12. A method according to claim 8 wherein the additional field of data also includes an instruction to the display device decoder not to decode and display the data in the identified packets of data immediately upon receipt.

13. A method according to claim 8 wherein the additional field of data includes an instruction to ignore any time stamp data.

14. A method according to claim 8 wherein a further additional field is generated to indicate the end of a particular sequence of data packets.

15. A method according to claim 14 wherein the end of a sequence of data packets indicates the end of a sequence of data which is required to generate one frame of video.

16. A method according to claim 8 wherein the method is repeated for each frame of video until the user selects to change the display mode.
